# FASCICULE DE BREVET EUROPEEN

(11) **EP 3 199 916 B1**
(45) Date de publication et mention de la délivrance du brevet: **14.11.2018**
(21) Numéro de dépôt: 17150667.8
(22) Date de dépôt: 09.01.2017
(51) Int. Cl.: G01C 5/06, B64C 27/20

(54) **ESTIMATEUR D'ALTITUDE POUR DRONE**
HÖHENSCHÄTZUNGSGERÄT FÜR EINE DROHNE
ALTITUDE ESTIMATOR FOR DRONES

(30) Priorité: 26.01.2016 FR 1650605
(43) Date de publication de la demande: 02.08.2017
(73) Titulaire: Parrot Drones, 75010 Paris (FR)
(72) Inventeur: BABEL, Mathieu, 75009 PARIS (FR); TEXIER, Nicolas, 75017 PARIS (FR); MARTIN, Nicolas, 95600 Eaubonne (FR)
(74) Mandataire: Dupuis-Latour, Dominique

(56) Documents cités:
- EP-A1- 2 644 240
- US-A- 5 349 347
- US-B1- 6 819 983

## Description

L'invention concerne les drones, notamment les drones à voilure tournante tels que les quadricoptères et analogues et les drones à voilure fixe. Les drones à voilure fixe sont pourvus d'au moins un rotor entrainé par au moins un moteur respectif.

Les drones à voilure tournante sont pourvus de rotors multiples entrainés par des moteurs respectifs commandables de manière différenciée afin de piloter le drone en attitude et en vitesse.

Un exemple typique d'un tel drone est l*'AR.Drone,* le *Bebop Drone* ou le *Bebop 2* de Parrot SA, Paris, France, qui est un quadricoptère équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Les WO 2010/061099 A2 et EP 2 364 757 A1 (Parrot SA) décrivent un tel drone ainsi que son principe de pilotage par l'intermédiaire d'un téléphone ou baladeur multimedia à écran tactile et accéléromètre intégré, par exemple un téléphone cellulaire de type *iPhone* ou un baladeur ou une tablette multimedia de type *iPod Touch* ou *iPad* (marques déposées de Apple Inc., USA). Le drone est piloté par l'utilisateur au moyen de signaux émis par le détecteur d'inclinaisons de l'appareil, inclinaisons qui seront répliquées par le drone : par exemple, pour faire avancer le drone l'utilisateur incline son appareil selon son axe de tangage, et pour déporter le drone à droite ou à gauche il incline ce même appareil par rapport à son axe de roulis. De cette manière, si le drone est commandé de manière à s'incliner ou "plonger" vers le bas (inclinaison suivant un angle de tangage), il progressera vers l'avant avec une vitesse d'autant plus élevée que l'inclinaison sera importante ; inversement s'il est commandé de manière à se "cabrer" dans le sens opposé, sa vitesse ralentira progressivement puis s'inversera en repartant vers l'arrière. De la même façon, pour une commande d'inclinaison suivant un axe de roulis le drone penchera à droite ou à gauche, provoquant un déplacement linéaire en translation horizontale vers la droite ou vers la gauche.

L'utilisateur dispose d'autres commandes affichées sur l'écran tactile, notamment de "montée/descente" (commande des gaz) et de "pivotement à droite/pivotement à gauche" (pivotement du drone autour de son axe de lacet).

L'invention concerne plus particulièrement l'évaluation de l'altitude à laquelle évolue le drone.

Par "altitude", on entendra la valeur de la position instantanée du drone en direction verticale, considérée dans un repère terrestre fixe tel qu'un repère galiléen, dont l'altitude zéro correspondra à la position du drone au sol, au moment de son décollage. Cette "altitude" est donc une grandeur absolue.

Le drone tel que le *AR.Drone* décrit dans les documents précités est muni d'un télémètre à ultrasons aussi appelé capteur US comportant un transducteur électroacoustique permettant l'émission et la réception d'ultrasons. Ce transducteur émet une brève salve d'ultrasons de quelques dizaines ou centaines de microsecondes, puis attend le retour de l'écho acoustique envoyé après réflexion sur le sol. Le laps de temps séparant l'émission de la salve de la réception de l'écho permet, connaissant la vitesse du son, d'estimer la longueur du chemin acoustique parcouru et donc d'évaluer la distance séparant le drone de la surface réfléchissante. En réalité, dans la mesure où le faisceau du capteur US est relativement large (typiquement un cône de 55° d'ouverture environ), le transducteur reçoit le plus souvent une multiplicité d'échos, et discrimine parmi ces échos celui qui correspond au point le plus proche. Cette mesure est itérée à intervalles rapprochés, avec une fréquence de récurrence typique des salves d'ultrasons de 25 Hz.

Un tel estimateur d'altitude mettant en oeuvre un télémètre à ultrasons est décrit par exemple dans le EP 2 400 460 A1 (Parrot SA), où il est utilisé en particulier pour calculer un facteur d'échelle à appliquer à des images successives du terrain survolé par le drone, utilisées notamment pour apprécier la vitesse horizontale de celui-ci par rapport au sol, en combinaison avec les données accélérométriques.

Le résultat fourni par un télémètre à ultrasons, ci-après nommé "distance", est en tout état de cause une grandeur relative, fonction du relief du terrain survolé par le drone. En effet, la distance mesurée peut différer de l'altitude (au sens indiqué ci-dessus), en particulier lorsque le drone vient à passer au-dessus d'un obstacle, par exemple s'il survole, à altitude constante, une table ou un mur : pendant la durée de ce survol, la distance mesurée par le télémètre à ultrasons va brusquement décroitre, alors même que l'altitude n'aura pas varié.

Si l'on s'en tient uniquement aux indications du télémètre, on risque donc de faire faire au drone du "suivi de terrain", ce qui n'est pas le but recherché, notamment en terrain accidenté lorsque l'on souhaite seulement maintenir l'altitude à une valeur stable.

L'invention vise à résoudre un certain nombre de problèmes résultant de ce phénomène, ainsi que d'autres inconvénients propres aux capteurs télémétriques à ultrasons.

Ces capteurs présentent les caractéristiques suivantes :
- la mesure produite n'est qu'une mesure relative de l'altitude (mesure de distance, télémétrique) ;
- en situation réelle, la mesure est très parasitée, du fait d'échos multiples renvoyés par le sol, du terrain plus ou moins réfléchissant et de fréquentes disparitions du signal par exemple lorsque le drone survole un terrain absorbant (broussailles...) ;
- la portée est limitée, environ 6 m dans le cas de l*'AR.Drone* décrit dans les documents précités, et au-delà de cette valeur le signal télémétrique disparait brusquement ;
- en revanche, la mesure est très rapide, elle peut être réitérée à fréquence élevée (typiquement 25 Hz), et sa précision est excellente, de l'ordre de quelques centimètres sur une échelle de mesure allant de quelques dizaines de centimètres à plusieurs mètres.

Pour pallier ces inconvénients, il est possible d'utiliser en combinaison avec le capteur télémétrique un autre type de capteur, à savoir un capteur de pression, ou capteur barométrique, comme cela est décrit dans le EP 2 644 240 A1 (Parrot SA).

Un capteur barométrique permet de mesurer les variations de pression au cours du vol, variations qui sont corrélées aux variations d'altitude. On peut ainsi obtenir une mesure absolue de l'altitude par intégration de ces variations à partir d'une altitude zéro au moment du décollage.

Un capteur barométrique présente les caractéristiques suivantes :
- il fournit une mesure absolue, indépendante du terrain survolé ;
- il est utilisable en haute altitude, sans limite supérieure ;
- en revanche, il est lent et peu précis, dans la mesure où il est nécessaire d'intégrer des variations de pression ;
- par ailleurs, il est sujet aux perturbations aérodynamiques, notamment à faible altitude en raison de l'effet de sol, lorsque les rotors du drone produisent des turbulences importantes rendant inutilisable les signaux délivrés par le capteur de pression.

En effet, le capteur barométrique est un capteur de pression mesurant la pression statique qui donne une indication de l'altitude. Cette altitude devrait être absolue et indépendante du mouvement du drone.

De plus, les drones, de par leur taille, ont des contraintes d'intégration des différents capteurs équipant le drone puisqu'ils doivent être positionnés sur de petites cartes électroniques (les plus petites possibles) et être positionnés dans des emplacements réduits. En outre, ces contraintes dimensionnelles du drone ont un impact sur les contraintes de poids, d'autonomie, de stabilité et de coût.

L'ensemble de ces contraintes fait que le capteur barométrique est très souvent positionné dans une cavité, la cavité fermée étant réalisée au moyen de matériaux relativement souples.

Un tel assemblage présente l'inconvénient suivant. Lors du vol du drone, la vitesse relative de l'air applique une pression dynamique sur la surface extérieure du drone provoquant une déformation de la structure du drone et modifie la pression statique à l'intérieur de la cavité, notamment à l'intérieur de la cavité logeant le capteur barométrique. La pression statique de la cavité contenant le capteur barométrique étant modifiée, l'altitude détectée par le capteur barométrique est donc erronée.

Ainsi, le but de l'invention est de proposer un drone comportant des moyens de détermination d'altitude pourvus de moyens de réajustement éventuel de la mesure d'altitude détectée, qui permette de résoudre cette difficulté en toutes circonstances.

L'invention propose à cet effet un drone tel que divulgué par le EP 2 644 240 A1 précité, comprenant : un capteur barométrique apte à délivrer un signal d'altitude du drone ; au moins un capteur de mesure d'attitude dudit drone apte à estimer au moins un angle d'attitude du drone, et des moyens de détermination d'altitude aptes à délivrer une valeur d'altitude du drone exprimée dans un repère terrestre absolu.

De façon caractéristique de l'invention, le drone comprend au moins un capteur de vitesse de vent relatif apte à mesurer la vitesse du vent relatif, et les moyens de détermination d'altitude comprennent :
- un dispositif de mémorisation de données de compensation d'altitude prédéterminées,
- un estimateur d'altitude recevant en entrée les signaux délivrés par ledit au moins un capteur de mesure d'attitude et par ledit au moins un capteur de vitesse de vent relatif et par le capteur barométrique et combinant ces signaux avec les données de compensation d'altitude mémorisées dans le dispositif de mémorisation pour délivrer en sortie la valeur d'altitude estimée du drone.

Selon diverses caractéristiques subsidiaires avantageuses :
- l'estimateur d'altitude est apte à déterminer périodiquement l'altitude estimée en fonction des signaux délivrés par ledit au moins un capteur de mesure d'attitude et par ledit au moins un capteur de vitesse de vent relatif et par le capteur barométrique.
- des attitudes dudit drone comprennent le tangage et/ou le roulis.
- le dispositif de mémorisation de données de compensation d'altitude prédéterminées comprend des données de compensation d'altitude préalablement déterminées au moyen de mesures des perturbations provoquées sur ledit drone.
- l'estimateur d'altitude comprend un dispositif de détermination de la compensation à appliquer et un dispositif de calcul de l'altitude estimée.
- le dispositif de détermination de la compensation à appliquer détermine la compensation à appliquer à partir des signaux délivrés par ledit au moins capteur de mesure d'attitude et par ledit au moins un capteur de vitesse de vent relatif et en combinant ces signaux avec les données de compensation d'altitude mémorisées dans le dispositif de mémorisation et le dispositif de calcul de l'altitude estimée comprend des moyens aptes à ajouter l'altitude délivrée par le capteur barométrique et la compensation à appliquer pour déterminer l'altitude estimée.

On va maintenant décrire un exemple de mise en oeuvre du dispositif de l'invention, en référence aux dessins annexés.
La Figure 1 est une vue d'ensemble montrant le drone et l'appareil de télécommande associé permettant son pilotage à distance.
La Figure 2 est un schéma par blocs des principaux organes du drone permettant l'estimation de l'altitude du drone conformément à l'invention.
La Figure 3 est un schéma par blocs des différents organes des moyens de détermination d'altitude conformément à l'invention.
La Figure 4 est un organigramme de détermination de l'altitude estimée selon l'invention.
La Figure 5 est un chronogramme montrant la mesure d'altitude estimée après correction conformément à l'invention.

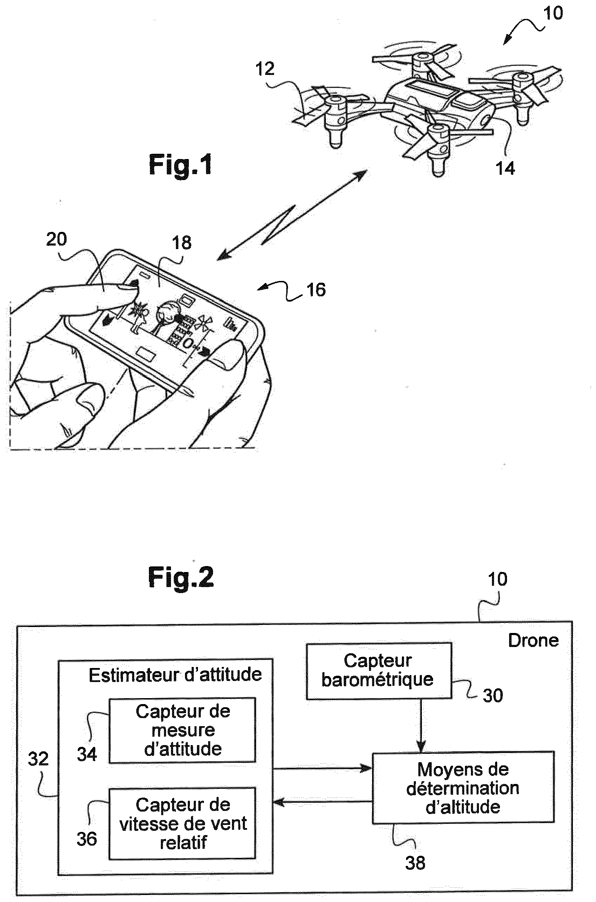

Sur la Figure 1, la référence 10 désigne de façon générale un drone, par exemple un drone à voilure tournante de type quadricoptère tel que l*'AR.Drone,* le *Bebop Drone,* le *Bebop 2* précités, décrits dans les WO 2010/061099 A2 et EP 2 364 757 A1, ainsi que les FR 2 915 569 A1 (qui décrit notamment le système de gyromètres et accéléromètres utilisé par le drone) et EP 2 431 084 A1 (qui décrit notamment la manière de contrôler des trajectoires prédéterminées).

Conformément à l'invention, le drone peut être également un drone à voilure fixe, notamment de type "aile volante" tel que par exemple le modèle eBee de SenseFly, Cheseaux-Lausanne, Suisse, qui est un drone de cartographie professionnelle de terrain, ou encore le modèle *Disco* récemment présenté par Parrot SA, Paris, France.

Le drone 10 illustré en Figure 1 comporte quatre rotors coplanaires 12 dont les moteurs sont pilotés indépendamment par un système intégré de navigation et de contrôle d'attitude.

Le drone est pourvu d'une première caméra à visée frontale 14 permettant d'obtenir une image de la scène vers laquelle le drone est orienté, ainsi qu'une seconde caméra à visée verticale, pointant vers le bas pour capter des images successives du terrain survolé et utilisée notamment pour évaluer la vitesse du drone par rapport au sol en combinaison avec des données accélérométriques, grâce à un logiciel qui estime le déplacement de la scène captée par la caméra d'une image à la suivante et applique à ce déplacement estimé un facteur d'échelle fonction de l'altitude mesurée. Cette technique est décrite en détail dans le document EP 2 400 460 A1 précité, auquel on pourra se référer pour de plus amples détails.

Tel que montré en Figure 1, le drone 10 est piloté par un appareil de télécommande distant 16 pourvu d'un écran tactile 18 affichant l'image embarquée par l'une des caméras du drone, avec en superposition un certain nombre de symboles permettant l'activation de commandes de pilotage par simple contact du doigt 20 d'un utilisateur sur l'écran tactile 18. L'appareil 16 est pourvu de capteurs d'inclinaison permettant de contrôler l'attitude du drone. En outre, l'appareil de télécommande peut afficher des données de statut du drone, notamment l'altitude du drone.

Pour l'échange bidirectionnel de données avec le drone, l'appareil de télécommande distant 16 est également pourvu de moyens de liaison radio, par exemple de type réseau local *WiFi* (IEEE 802.11) ou *Bluetooth* (marques déposées). L'appareil de télécommande 16 est avantageusement constitué par un téléphone ou baladeur multimédia à écran tactile et accéléromètre intégré, par exemple un téléphone cellulaire de type *iPhone*, un baladeur de type *iPod Touch* ou une tablette multimédia de type *iPad*, qui sont des appareils incorporant les divers organes de contrôle nécessaires à l'affichage et à la détection des commandes de pilotage, à la visualisation de l'image captée par la caméra frontale, et à l'échange bidirectionnel de données avec le drone par liaison *WiFi* ou *Bluetooth.*

Le pilotage du drone 10 consiste à faire évoluer celui-ci en commandant les moteurs de façon différenciée pour engendrer, selon le cas, des mouvements de :
a) rotation autour d'un axe de tangage, pour faire avancer ou reculer le drone ; et/ou
b) rotation autour d'un axe de roulis, pour décaler le drone vers la droite ou vers la gauche ; et/ou
c) rotation autour d'un axe de lacet, pour faire pivoter vers la droite ou vers la gauche l'axe principal du drone ; et/ou
d) translation vers le bas ou vers le haut par changement du régime des gaz, de manière à respectivement réduire ou augmenter l'altitude du drone.

Le drone possède également un système automatique et autonome de stabilisation en vol stationnaire (configuration de "point fixe", autopilotée), activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et stabilisé automatiquement, sans aucune intervention de l'utilisateur.

En Figure 2, il est représenté les principaux organes du drone permettant l'estimation de l'altitude du drone. Ces organes sont présents sur tout type de drone, notamment les drones à voilure tournante et les drones à voilure fixe. Le drone 10 comprend un capteur barométrique 30 embarqué apte à délivrer un signal de variation d'altitude du drone et donc fournir des mesures qui donnent l'altitude du drone par rapport au sol.

Le capteur barométrique est très souvent positionné dans une cavité fermée, la cavité étant réalisée au moyen de matériaux relativement souples. Le drone 10 comprend en outre un estimateur d'attitude 32 permettant d'obtenir des mesures du comportement du drone. Pour cela, il comprend un ou plusieurs capteurs de mesure d'attitude 34. Des exemples de capteurs sont les capteurs inertiels (accéléromètres et gyromètres) permettant de mesurer avec une certaine précision les vitesses angulaires et au moins un angle d'attitude du drone, c'est-à-dire les angles d'Euler décrivant l'inclinaison du drone par rapport à un plan horizontal d'un repère terrestre fixe.

En outre, le drone, en particulier l'estimateur d'attitude 32, comprend au moins un capteur de vitesse de vent relatif 36 apte à mesurer la vitesse du vent relatif.

Conformément à l'invention, le drone 10 dispose aussi de moyens de détermination d'altitude du drone 38 aptes à délivrer une valeur d'altitude du drone exprimée dans un repère terrestre absolu.

Le capteur barométrique 30 étant positionné très souvent dans une cavité dont la structure est susceptible d'être déformée lors du vol du drone, la pression statique à l'intérieur de la cavité va varier durant le vol du drone et donc l'altitude détectée par le capteur barométrique 30 est par conséquent erronée.

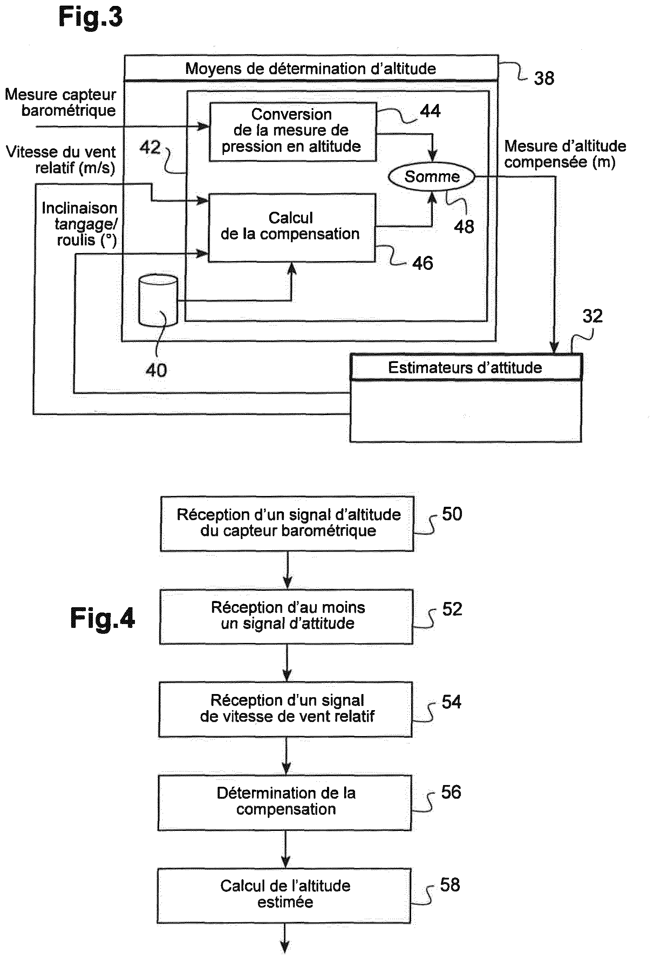

Comme illustré en Figure 3, afin de corriger l'altitude détectée par le capteur barométrique 30 du drone, quelque soit le drone, c'est-à-dire notamment à voilure fixe ou à voilure tournante, les moyens de détermination d'altitude 38 comprennent un estimateur d'altitude 42 apte à estimer l'altitude réelle du drone à partir de données d'attitude du drone et de vitesse de vent relatif et aussi à partir de données de compensation d'altitude mémorisées dans un dispositif de mémorisation 40 pour délivrer en sortie la valeur d'altitude estimée du drone.

Selon un mode de réalisation, le dispositif de mémorisation de données de compensation d'altitude prédéterminées 40 comprend pour un ensemble d'attitudes possibles du drone et de vitesses particulières de vent relatif, des données de compensation d'altitude préalablement déterminées au moyen de mesures de perturbation provoquées sur ledit drone. Notamment, ces données de compensation sont déterminées par exemple par des mesures réalisées sur des bancs d'essai, notamment en soufflerie afin de déterminer la différence entre l'altitude détectée par le capteur barométrique 30 et l'altitude réelle en fonction notamment de données d'attitude du drone et de vitesse du vent relatif.

Selon un exemple particulier de réalisation de la détermination des données de compensation, il est créé en soufflerie une cartographie intégrant les valeurs mesurées par le capteur barométrique 30, appelées mesures brutes, dans différentes conditions de vitesse de vent relatif et d'attitude du drone.

Afin de réduire les erreurs de mesure du capteur barométrique 30, une pluralité de mesures brutes peut être réalisée pour chaque condition de vitesse de vent relatif et d'attitude du drone, puis une moyenne de ces valeurs brutes mesurées est réalisée.

Ainsi, des mesures brutes du capteur barométrique 30 sont réalisées pour un ensemble d'attitudes du drone, c'est-à-dire d'angle de tangage et/ou d'angle de roulis et pour différentes vitesses de vent relatif.

Les mesures sont réalisées dans une pièce particulière qui présente une pression donnée.

Ainsi, pour chaque valeur brute mesurée, il est déterminé la dérive de pression statique dans le logement du baromètre lors de chaque test et il est ainsi déterminé la correction à apporter à la mesure brute d'altitude détectée par le capteur barométrique pour chaque attitude du drone relativement à la vitesse du vent relatif.

Il est ainsi établi des données de compensation d'altitude pour un ensemble d'attitudes du drone et pour un ensemble de données de vitesse du vent relatif.

Le tableau ci-dessous illustre un exemple de données de compensation à appliquer sur la valeur d'altitude détectée par le capteur barométrique lorsque le drone présente un roulis de 40° et aucun angle de tangage.

| Vitesse du vent relatif | roulis de 40° | roulis de -40° |
|---|---|---|
| -30 m/s | -10 m | -10 m |
| -10 m/s | -2 m | -2 m |
| 0 m/s | 0 m | 0 m |

Ainsi, selon cet exemple, lorsque le drone présente un angle de roulis de 40° et que la vitesse du vent relatif est de -30 m/s alors l'altitude détectée par le capteur barométrique doit être ajustée de -10 m.

De même selon cet exemple, lorsque le drone présente un angle de roulis de -40° et que la vitesse du vent relatif est de -10 m/s alors l'altitude détectée par le capteur barométrique doit être ajustée de -2m.

Tel que montré en Figure 3, les moyens de détermination d'altitude 38 comprennent un estimateur d'altitude 42, recevant en entrée les signaux délivrés par ledit au moins capteur de mesure d'attitude 34 dudit drone et par ledit au moins un capteur de vitesse de vent relatif 36 et par le capteur barométrique 30 et combinant ces signaux avec les données de compensation d'altitude mémorisées dans le dispositif de mémorisation 40 pour délivrer en sortie ladite valeur d'altitude estimée du drone.

Selon un mode de réalisation particulier, le drone 10 comprend un dispositif de conversion de la mesure de pression 44 délivrée par le capteur barométrique en une mesure d'altitude détectée. Selon un exemple de réalisation, le dispositif de conversion de la mesure de pression est compris dans l'estimateur d'altitude. Selon une alternative de réalisation, le dispositif de conversion de la mesure de pression 44 est situé en amont de l'estimateur d'altitude 42.

Selon un mode de réalisation particulier, l'estimateur d'altitude 42 comprend un dispositif de détermination de la compensation à appliquer 46 et un dispositif de calcul de l'altitude estimée 48.

Le dispositif de détermination de la compensation à appliquer 46 détermine la compensation à appliquer à l'altitude détectée, à partir des signaux délivrés par ledit au moins capteur de mesure d'attitude 34 et par ledit au moins un capteur de vitesse de vent relatif 36 et en combinant ces signaux avec les données de compensation d'altitude mémorisées dans le dispositif de mémorisation de données de compensation d'altitude prédéterminées 40.

Selon un mode de réalisation particulier du dispositif de détermination de la compensation 46, ce dernier détermine pour chaque angle d'attitude, notamment l'angle de tangage et l'angle de roulis, la compensation à appliquer à l'altitude détectée. La compensation totale à appliquer correspond à la somme des compensations déterminées pour chaque angle d'attitude du drone. Ainsi, le dispositif de détermination de la compensation 46 délivre ainsi la compensation totale déterminée à appliquer à l'altitude détectée par le capteur barométrique 30.

Selon un mode de réalisation particulier, lorsque les signaux délivrés par ledit au moins un capteur de mesure d'attitude 34 dudit drone et par ledit au moins un capteur de vitesse de vent relatif 36 ne correspondent pas à des données mémorisées dans le dispositif de mémorisation 40 mais se trouvent entre des données mémorisées, alors il est réalisé une interpolation des données de compensation à partir des données mémorisées d'attitude et de vitesse de vent relatif les plus proches afin de déterminer au mieux la compensation à appliquer sur l'altitude détectée par le capteur barométrique.

Le dispositif de calcul de l'altitude estimée 48 comprend des moyens aptes à additionner l'altitude délivrée par le capteur barométrique 30 ou par le dispositif de conversion de la mesure de pression 44 et la compensation déterminée par le dispositif de détermination de la compensation 46 pour estimer l'altitude du drone.

Selon un mode de réalisation particulier, l'estimateur d'altitude 42 est apte à déterminer périodiquement ou à la demande l'altitude du drone en fonction des signaux délivrés par ledit au moins capteur d'attitude du drone et par ledit au moins un capteur de vitesse de vent relatif et par le capteur barométrique.

En Figure 4 est représenté un diagramme d'étapes afin d'illustrer le procédé de détermination de l'altitude estimée conformément à l'invention, mis en oeuvre notamment dans les moyens de détermination d'altitude 38. Ce procédé comprend une étape 50 de réception de signaux du capteur barométrique correspondant à l'altitude détectée par le capteur barométrique.

Cette étape est suivie de l'étape 52 de réception de signaux délivrés par le capteur de mesure d'attitude comprenant notamment le tangage et/ou le roulis.

L'étape 52 est suivie de l'étape 54 de réception d'un signal de mesure de la vitesse du vent relatif.

L'étape 54 est suivie d'une étape 56 de détermination de la compensation à appliquer sur l'altitude détectée à partir des mesures d'attitude du drone et de la mesure de la vitesse du vent relatif.

Selon un mode de réalisation particulier, la détermination de la compensation est réalisée pour chacun des angles d'attitude du drone, notamment, pour le tangage et le roulis. Ainsi, si le drone a un angle de tangage et pas d'angle de roulis, alors il sera déterminé une seule valeur de compensation. Si au contraire, le drone présente un angle de tangage et un angle de roulis, alors il est déterminé deux compensations à appliquer, un pour chaque angle d'attitude du drone. Ainsi, la compensation totale à appliquer est alors déterminée par la somme des compensations déterminées. L'étape 56 est suivie d'une étape 58 de calcul de l'altitude estimée à partir de l'altitude détectée à l'étape 50 et de la compensation à appliquer déterminée à l'étape 56. Notamment l'altitude estimée est la somme de l'altitude détectée et de la compensation à appliquer déterminée.

Ce procédé est mis en oeuvre à chaque fois qu'il est nécessaire de connaitre l'altitude au plus juste du drone. Selon un autre mode de réalisation, il peut être mis en oeuvre régulièrement, par exemple toutes les secondes.

Il est à noter que les étapes 50 à 52 peuvent être exécutées dans un ordre différent ou en parallèle.

L'altitude estimée par les moyens de détermination d'altitude 38 est fournie en entrée du dispositif estimateur d'attitude 32. Ce dernier met en oeuvre par exemple un estimateur d'état de type "filtre de Kalman", qui est un filtre à réponse impulsionnelle infinie qui estime les états d'un système dynamique (le drone dans le cas présent) à partir d'une série de mesures appliquées en entrée. On trouvera les principes généraux de cette technique par exemple dans R.E. Kalman, A new Approach to Linear Filtering and Prediction Problems, Transactions of the ASME - Journal of Basic Engineering, Vol. 82 (1960).

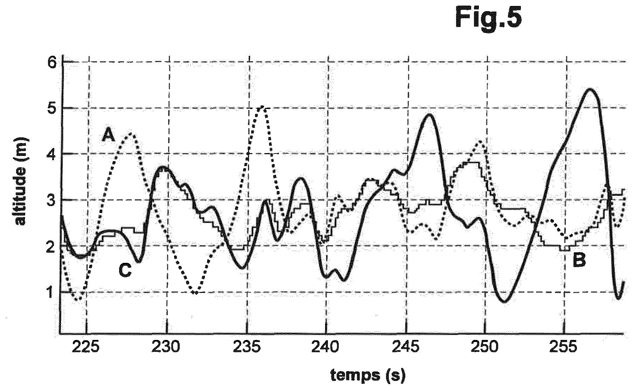

La Figure 5 illustre l'altitude estimée du drone à partir des moyens de détermination d'altitude conformément à l'invention.

La Figure 5 illustre en ligne référencée A la mesure de l'altitude détectée par le capteur barométrique 30 alors que la ligne référencée B présente l'altitude réelle obtenue par un dispositif de géolocalisation (dispositif GPS). Il peut être observé que lors d'un vol très dynamique du drone, la mesure du capteur barométrique 30 est très perturbée par rapport à la mesure d'altitude réalisée par un dispositif de géolocalisation. Après application du procédé de détermination d'altitude par les moyens de détermination d'altitude 38 conformément à l'invention, l'altitude estimée du drone est représentée par une ligne référencée C. Il peut être observé que l'altitude estimée conformément à l'invention est très proche de la valeur de l'altitude mesurée par le dispositif de géolocalisation.

## Revendications

1. Drone comprenant :
- un capteur barométrique (30) apte à délivrer un signal d'altitude du drone ;
- au moins un capteur de mesure d'attitude (34) dudit drone apte à estimer au moins un angle d'attitude du drone,
- des moyens de détermination d'altitude (38) aptes à délivrer une valeur d'altitude du drone exprimée dans un repère terrestre absolu,
**caractérisé en ce que** le drone comprend au moins un capteur de vitesse de vent relatif (36) apte à mesurer la vitesse du vent relatif,
et **en ce que** les moyens de détermination d'altitude (38) comprennent :
- un dispositif de mémorisation de données de compensation d'altitude prédéterminées (40),
- un estimateur d'altitude (42) recevant en entrée les signaux délivrés par ledit au moins un capteur de mesure d'attitude (34) et par ledit au moins un capteur de vitesse de vent relatif (36) et par le capteur barométrique (30) et combinant ces signaux avec les données de compensation d'altitude mémorisées dans le dispositif de mémorisation (40) pour délivrer en sortie la valeur d'altitude estimée du drone.

2. Drone selon la revendication 1, dans lequel l'estimateur d'altitude (42) est apte à déterminer périodiquement l'altitude estimée en fonction des signaux délivrés par ledit au moins un capteur de mesure d'attitude et par ledit au moins un capteur de vitesse de vent relatif et par le capteur barométrique.

3. Drone selon la revendication 1, **caractérisé en ce que** des attitudes dudit drone comprennent le tangage et/ou le roulis.

4. Drone selon la revendication 1, **caractérisé en ce que** le dispositif de mémorisation de données de compensation d'altitude prédéterminées (40) comprend des données de compensation d'altitude préalablement déterminées par mesure de perturbations provoquées sur ledit drone.

5. Drone selon la revendication 1, **caractérisé en ce que** l'estimateur d'altitude (42) comprend un dispositif de détermination de la compensation à appliquer (46) et un dispositif de calcul de l'altitude estimée (48).

6. Drone selon la revendication 5, **caractérisé en ce que** le dispositif de détermination de la compensation à appliquer (46) détermine la compensation à appliquer à partir des signaux délivrés par ledit au moins capteur de mesure d'attitude et par ledit au moins un capteur de vitesse de vent relatif et en combinant ces signaux avec les données de compensation d'altitude mémorisées dans le dispositif de mémorisation (40),
et **en ce que** le dispositif de calcul de l'altitude estimée (48) comprend des moyens aptes à ajouter l'altitude délivrée par le capteur barométrique (30) et la compensation à appliquer pour déterminer l'altitude estimée.

## Patentansprüche

1. Drohne, umfassend:
- einen barometrischen Sensor (30) für die Ausgabe eines Höhensignals der Drohne;
- mindestens einen Sensor zum Messen des Flugverhaltens (34) der Drohne zur Schätzung mindestens eines Flugverhaltenswinkels der Drohne,
- Einrichtungen zur Höhenermittlung (38) zur Ausgabe eines Wertes für die Höhe der Drohne, ausgedrückt in einem absoluten terrestrischen Bezugssystem,
**dadurch gekennzeichnet, dass** die Drohne mindestens einen Sensor für die Geschwindigkeit des relativen Windes (36) zur Messung der Geschwindigkeit des relativen Windes umfasst
und dass die Einrichtungen zur Höhenermittlung (38) Folgendes umfassen:
- eine Vorrichtung zum Speichern von vorherbestimmten Höhenkompensationsdaten (40),
- eine Höhenschätzeinrichtung (42), die am Eingang die Signale empfängt, die von dem mindestens einen Sensor zum Messen des Flugverhaltens (34) und von dem mindestens einen Sensor für die Geschwindigkeit des relativen Windes (36) und von dem barometrischen Sensor (30) ausgeben werden, und diese Signale mit den in der Speichervorrichtung (40) gespeicherten Höhenkompensationsdaten kombiniert, um am Ausgang den Wert der geschätzten Höhe der Drohne auszugeben.

2. Drohne nach Anspruch 1, wobei die Höhenschätzeinrichtung (42) eingerichtet ist, um periodisch die geschätzte Höhe in Abhängigkeit von den Signalen zu ermitteln, die von dem mindestens einen Sensor zum Messen des Flugverhaltens und von dem mindestens einen Sensor für die Geschwindigkeit des relativen Windes und von dem barometrischen Sensor ausgeben werden.

3. Drohne nach Anspruch 1, **dadurch gekennzeichnet, dass** Flugverhalten der Drohne die Nickbewegung und/oder die Rollbewegung umfassen.

4. Drohne nach Anspruch 1, **dadurch gekennzeichnet, dass** die Vorrichtung zum Speichern von vorherbestimmten Höhenkompensationsdaten (40) Höhenkompensationsdaten umfasst, die zuvor durch Messen von an der Drohne verursachten Perturbationen ermittelt wurden.

5. Drohne nach Anspruch 1, **dadurch gekennzeichnet, dass** die Höhenschätzeinrichtung (42) eine Vorrichtung zum Ermitteln der anzuwendenden Kompensation (46) und eine Vorrichtung zum Berechnen der geschätzten Höhe (48) umfasst.

6. Drohne nach Anspruch 5, **dadurch gekennzeichnet, dass** die Vorrichtung zum Ermitteln der anzuwendenden Kompensation (46) die Kompensation ermittelt, die ausgehend von den Signalen, die von dem mindestens einen Sensor zum Messen des Flugverhaltens und von dem mindestens einen Sensor für die Geschwindigkeit des relativen Windes ausgeben werden, anzuwenden ist, und indem sie diese Signale mit den in der Speichervorrichtung (40) gespeicherten Höhenkompensationsdaten kombiniert,
und dass die Vorrichtung zum Berechnen der geschätzten Höhe (48) Einrichtungen zum Hinzufügen der von dem barometrischen Sensor (30) ausgegebenen Höhe und der anzuwendenden Kompensation, um die geschätzte Höhe zu ermitteln, umfasst.

## Claims

1. A drone comprising:
- a barometric sensor (30) adapted to deliver a drone altitude signal;
- at least one sensor (34) for measuring the attitude of said drone adapted to estimate at least one attitude angle of the drone,
- altitude determination means (38) adapted to deliver a drone altitude value, expressed in an absolute terrestrial reference system,
**characterized in that** the drone comprises at least one relative wind speed sensor (36) adapted to measure the relative wind speed,
and **in that** the altitude determination means (38) comprise:
- a device (40) for memorizing predetermined altitude compensation data,
- an altitude estimator (42) receiving as an input the signal delivered by said at least one attitude measuring sensor (34) and by said at least one relative wind speed sensor (36) and by the barometric sensor (30) and combining these signals with the altitude compensation data memorized in the memorization device (40) to output the estimated drone altitude value.

2. The drone according to claim 1, wherein the altitude estimator (42) is adapted to determine periodically the estimated altitude as a function of the signals delivered by said at least one attitude measurement sensor and by said at least one relative wind speed sensor and by the barometric sensor.

3. The drone according to claim 1, **characterized in that** attitudes of said drone comprise the pitch and/or the roll.

4. The drone according to claim 1, **characterized in that** the device (40) for memorizing predetermined altitude compensation data comprises altitude compensation data previously determined by measurement of the disturbances caused to said drone.

5. The drone according to claim 1, **characterized in that** the altitude estimator (42) comprises a device (46) for determining the compensation to be applied and a device (48) for calculating the estimated altitude.

6. The drone according to claim 5, **characterized in that** the device (46) for determining the compensation to be applied determines the compensation to be applied based on signals delivered by said at least one attitude measurement sensor and by said at least one relative wind speed sensor and by combining these signals to the altitude compensation data memorized in the memorization device (40),
and **in that** the device (48) for calculating the estimated altitude comprises means adapted to add the altitude delivered by the barometric sensor (30) and the compensation to be applied to determine the estimated altitude.
